# FASCICULE DE BREVET EUROPEEN

(11) **EP 3 013 194 B1**
(45) Date de publication et mention de la délivrance du brevet: **06.06.2018**
(21) Numéro de dépôt: 14733156.5
(22) Date de dépôt: 24.06.2014
(51) Int. Cl.: A47J 31/36

(54) **DISPOSITIF POUR PRÉPARER DES BOISSONS INFUSÉES COMPRENANT UN MOYEN DE POSITIONNEMENT DE LA CAPSULE**
VORRICHTUNG FÜR DIE ZUBEREITUNG VON AUFGUSSGETRÄNKEN MIT EINEM KAPSELPOSITIONIERUNGSMITTEL
DEVICE FOR PREPARING INFUSED DRINKS, COMPRISING A CAPSULE POSITIONING MEANS

(30) Priorité: 25.06.2013 BE 201300436
(43) Date de publication de la demande: 04.05.2016
(73) Titulaire: TCONCEPT COMPANY S.P.R.L., 1325 Corroy-le-Grand (BE)
(72) Inventeur: VAN BELLEGHEM, Luc, 1325 Corroy-le-Grand (BE); BEAUFILS, Yohann, 14200 Hérouville St Clair (FR)
(74) Mandataire: Office Kirkpatrick
(86) Numéro de dépôt international: PCT/EP2014/063298
(87) Numéro de publication internationale: WO 2014/206990

(56) Documents cités:
- EP-A1- 2 112 093
- WO-A1-2008/014830
- WO-A1-2012/020343

## Description

La présente invention se rapporte à un dispositif pour préparer des boissons infusées comprenant:
- un support agencé pour recevoir une capsule contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser, dans une position dans laquelle ladite face frontale est sensiblement verticale,
- des moyens d'injection agencés pour introduire un liquide d'infusion dans ladite capsule, lorsque ledit support reçoit une capsule,
- une chambre d'infusion présentant une ouverture sensiblement verticale, ladite ouverture sensiblement verticale étant agencée pour être en communication fluidique avec ladite paroi filtrante, ladite bague comportant des moyens d'étanchéité agencées pour maintenir la communication fluidique étanche par rapport à un milieu environnant, extérieur à une zone d'échange fluidique, et
- une sortie munie de moyens de fermeture/ouverture agencés pour permettre à un liquide infusé de s'écouler de la chambre d'infusion.

Un tel dispositif, procédé est connu par exemple du document EP2112093. Toutefois, selon ce document l'injection d'eau est effectuée au travers de la face dorsale de la capsule, nécessitant dès lors d'effectuer un perçage de celle-ci.

Malheureusement, un perçage dorsal présente quelques problème en ce que la capsule reste souvent empalée sur la pointe et ne peut donc être aisément évacuée sans intervention humaine, qui elle-même requiert parfois de démonter une partie du dispositif ou de rendre la zone dans laquelle la capsule se trouve loquée aisément accessible. Dans tous les cas, l'utilisation de la pointe pour percer la face dorsale de la capsule présente certains inconvénients tant au niveau de la conception de la machine que de celle de la capsule.

Le document WO 2012020343 enseigne un dispositif d'infusion qui comprend une chambre d'infusion qui est subdivisée en deux parties. Une première partie relativement immobile sur laquelle vient se fixer de manière étanche la deuxième partie qui inclut une capsule devant être infusée. La chambre d'infusion d'un tel dispositif est formée lorsque les première et deuxième parties sont en communication fluidique.

Malheureusement, le volume d'infusion d'un tel dispositif est limité par l'espace volumétrique d'infusion de la capsule contenant la matière à infuser.

On connait du document WO 2012025259 un dispositif du même type dans lequel un piston comprenant des moyens de perçage est décrit. Ce piston est mis en mouvement par un moteur basse tension de précision dès lors que celui-ci doit commander l'avancement du piston pour maintenir d'une part l'étanchéité et d'autre part assurer un alignement parfait du piston pour permettre la percée de la face dorsale qui doit être parfaitement transversale par rapport à la face dorsale de la capsule.

Malheureusement, un tel dispositif demande l'addition d'un moteur basse tension de précision qui est couteux et requiert de l'espace, alors que la tendance actuelle est de procurer des dispositif de faible encombrement à des prix concurrentiels.

L'invention a pour but de pallier les inconvénients de l'état de la technique en procurant une invention permettant de se passer d'un moteur basse tension et d'améliorer les coûts de production de la machine.

Pour résoudre ce problème, il est prévu suivant l'invention, un dispositif tel qu'indiqué au début dans lequel lesdits moyens d'injection dudit liquide d'infusion aboutissent dans la chambre d'infusion ou dans le récipient de la capsule par une tubulure d'injection de liquide d'infusion et comprenant un cylindre (9) comprenant une première extrémité et une deuxième extrémité, ladite première extrémité comprenant au moins une zone de contact agencée pour pousser ladite face dorsale de la capsule, et des moyens de translation agencés pour créer un mouvement horizontal de translation relatif entre ledit cylindre et ladite chambre d'infusion de manière à maintenir l'étanchéité entre la capsule et ladite chambre d'infusion par une force de compression exercée sur lesdits moyens d'étanchéité maintenant la communication fluidique, lesdits moyens de translation sont reliés audit cylindre, ledit cylindre présentant une première position reculée et une deuxième position de contact, lesdits moyens de translation étant agencés pour déplacer ledit cylindre entre ladite première position et ladite deuxième position, correspondant à une position dans laquelle ladite capsule est en contact étanche avec ladite chambre d'infusion et où ladite force de compression est exercée sur lesdits moyens d'étanchéités.

Un simple moyen de translation utilisant l'énergie présente ou humaine est prévu, sans dispositif additionnel comme un moteur basse tension permet d'effectuer une translation relative entre la chambre d'infusion et un cylindre maintenant l'étanchéité entre la capsule et la chambre d'infusion pour assurer la communication fluidique étanche entre les deux.

De plus, de cette façon, le liquide d'infusion pénètre au moyen de la tubulure d'injection dans ladite chambre d'infusion par le haut de la chambre d'infusion et s'écoule de manière à remplir progressivement l'ensemble constitué de la chambre d'infusion en communication fluidique avec ledit récipient défini par ladite enveloppe solide s'étendant entre ladite bague et ladite face dorsale, dans lequel se trouve la matière à infuser. Le récipient de la capsule est également rempli progressivement à la même vitesse que la chambre d'infusion. Ainsi, l'espace volumétrique d'injection est constitué par la chambre d'infusion et le récipient de la capsule.

Dans une variante, le liquide d'infusion qui alimente la chambre d'infusion s'écoule ainsi du haut vers le bas créant des turbulences dans une partie du liquide d'infusion déjà présent formant ainsi des turbulences dans le liquide d'infusion contenu dans la chambre d'infusion permettant d'améliorer l'homogénéité du liquide d'infusion qui devient au cours du temps le liquide infusé et un brassage de ce liquide d'infusion. De plus, cette injection de liquide d'injection via la chambre d'infusion permet d'obtenir une différence de température du liquide d'infusion présent dans la chambre d'infusion et celui présent dans le récipient de la capsule comprise entre 3 et 10°C et typiquement d'environ 5°C. Ceci permet de pouvoir atteindre une température optimale pour l'infusion dans le récipient de la capsule, tout en gardant le liquide d'infusion dans la chambre d'infusion à une température légèrement supérieure, permettant donc ainsi de servir une boisson infusée encore suffisamment chaude après la durée de l'infusion. Notons que durant toute la phase d'injection de liquide d'infusion, le liquide d'infusion nouvellement injecté réchauffe le liquide d'infusion déjà présent.

Dans une autre variante, ladite tubulure d'injection est prolongée d'un coude agencé pour injecter ledit liquide d'infusion au travers de ladite face frontale de ladite capsule. De cette façon, le liquide d'infusion alimente en premier lieu le récipient de la capsule et ensuite la chambre d'infusion. Le liquide d'infusion s'écoule ainsi du haut vers le bas créant des turbulences dans une partie du liquide d'infusion déjà présent dans le récipient de la capsule formant ainsi des turbulences dans le liquide d'infusion permettant d'améliorer l'homogénéité du liquide d'infusion qui devient au cours du temps le liquide infusé et un brassage de ce liquide d'infusion. De plus, cette injection de liquide d'injection dans le récipient de la capsule permet d'obtenir une différence de température du liquide d'infusion présent dans le récipient de la capsule et celui présent dans la chambre d'infusion comprise entre 3 et 10°C et typiquement d'environ 5°C. Ceci permet de pouvoir atteindre une température optimale pour l'infusion dans le récipient de la capsule, tout en gardant le liquide d'infusion dans la chambre d'infusion à une température légèrement inférieure, permettant donc ainsi de servir une boisson infusée encore suffisamment chaude après la durée de l'infusion. Notons que durant toute la phase d'injection de liquide d'infusion, le liquide d'infusion nouvellement injecté réchauffe le liquide d'infusion déjà présent.

Dans une forme de réalisation particulière, lesdits moyens de translation sont commandés manuellement par une poigné présentant une position de repos et une position d'activation où lorsque ladite poignée est en position de repos, ledit cylindre est en position reculée et lorsque ladite poignée est en position d'activation, ledit cylindre est en position de contact.

De préférence, l'invention se rapporte à un dispositif dans lequel lesdits moyens de translation sont commandés hydrauliquement par lesdits moyens d'injection.

Avantageusement, le dispositif selon la présente invention comprend en outre un deuxième cylindre, disposé concentriquement audit cylindre, relié auxdits moyens de translation ou faisant partie intégrante desdits moyens de translation.

De préférence, ledit cylindre présente une zone d'appui agencée pour exercer une force sur une face dorsale de ladite bague, située à l'opposé de la face frontale de la capsule et pour exercer une compression des moyens d'étanchéité pour maintenir la communication fluidique étanche par rapport audit milieu environnant.

Avantageusement, ledit deuxième cylindre, concentrique audit cylindre exerce une pression sur ladite face dorsale de ladite capsule permettant d'exercer une compression des moyens d'étanchéité pour maintenir la communication fluidique étanche par rapport audit milieu environnant.

Dans une forme de réalisation préférentielle, ladite force de compression exercée sur lesdits moyens d'étanchéités est une force d'action.

Dans une variante de la présente invention, lesdits moyens de translation sont reliés à ladite chambre d'infusion, ladite chambre d'infusion présentant une première position reculée et une deuxième position de contact, lesdits moyens de translation étant agencés pour déplacer ladite chambre d'infusion entre ladite première position et ladite deuxième position, correspondant à une position dans laquelle ladite capsule est en contact étanche avec ladite chambre d'infusion et où ladite force de compression est exercée sur lesdits moyens d'étanchéités.

Dans une forme de réalisation particulièrement avantageuse du dispositif selon l'invention, lesdits moyens de translation sont commandés manuellement par une poigné présentant une position de repos et une position d'activation où lorsque ladite poignée est en position de repos, ladite chambre d'infusion est en position reculée et lorsque ladite poignée est en position d'activation, ladite chambre d'infusion est en position de contact.

De plus, dans une forme de réalisation particulière, lesdits moyens de translation sont commandés hydrauliquement par lesdits moyens d'injection.

Avantageusement, le dispositif selon la présente invention comprend en outre, un deuxième cylindre, disposé concentriquement audit cylindre.

Préférentiellement, ledit cylindre présente une zone d'appui agencée pour exercer une force sur une face dorsale de ladite bague, située à l'opposé de la face frontale de la capsule et pour exercer une compression des moyens d'étanchéité pour maintenir la communication fluidique étanche par rapport audit milieu environnant.

Dans un autre mode préféré selon la présente invention, ledit deuxième cylindre, concentrique audit cylindre exerce une pression sur ladite face dorsale de ladite capsule permettant d'exercer une compression des moyens d'étanchéité pour maintenir la communication fluidique étanche par rapport audit milieu environnant.

De manière préférentielle, ladite force de compression exercée sur lesdits moyens d'étanchéités est une force de réaction.

Avantageusement, lesdits moyens de translation sont reliés audit cylindre et à ladite chambre d'infusion, ledit cylindre et ladite chambre d'infusion présentant chacun une première position reculée et une deuxième position de contact, lesdits moyens de translation étant agencés pour déplacer ladite chambre d'infusion et ledit cylindre entre ladite première position et ladite deuxième position, correspondant à une position dans laquelle ladite capsule est en contact étanche avec ladite chambre d'infusion et où ladite force de compression est exercée sur lesdits moyens d'étanchéités.

Dans un mode particulièrement préféré de la présente invention, le dispositif comprend des moyens de détection agencés pour lire une information logée sur ladite face dorsale de ladite capsule, lesdits moyens de détection étant au moins partiellement confinés dans ledit cylindre ou ledit deuxième cylindre.

En effet, dès lors que selon la présente invention le cylindre ne doit plus comporter de moyens pour percer la face dorsale de la capsule, il peut alors accueillir des moyens de détection tout en les protégeant de l'environnement de la machine, par exemple de la lumière pour assurer une détection précise et efficace de l'information. Cette information contiendra avantageusement des paramètres de température, de pression et de quantité (volume) de liquide d'infusion à prévoir et à appliquer ainsi que des informations quant à la durée de l'étape d'infusion. Les moyens de détection génèrent alors un signal transmis à des moyens de contrôle auxiliaire comme un régulateur de pression, de température, et de volume pour l'ajustement de ces paramètres ainsi qu'aux moyens de commande de l'ouverture de l'évacuation du liquide infusé, permettant ainsi d'avoir une boisson infusée parfaite quelque soit la nature de ma matière sèche à infusé en toute circonstance, chaque matière à infusé présentant différentes conditions d'infusion (température, pression, durée et volume) prédéfinies dans le set up de la machine pour permettre ladite infusion optimale.

De préférence, lesdits moyens de détection sont des moyens de détection de code barre, de couleur, de pictogramme, de tag et analogues.

Avantageusement, ladite chambre d'infusion est au moins formée partiellement d'une matière à base de polyfluorure, comme par exemple du PTFE, FEP, or PFA.

De manière avantageuse, ledit support de capsule est un siège présentant une structure significativement ouverte.

De manière plus préférentielle, ladite tubulure d'injection de liquide d'infusion est reliée à une partie supérieure de ladite chambre d'infusion à proximité de ladite ouverture sensiblement verticale.

En outre, le dispositif selon la présente invention comprend des moyens de nettoyage agencés pour introduire un liquide de rinçage dans ladite chambre d'infusion.

D'une manière similaire, le dispositif selon la présente invention comprend en outre un moyen de chauffage dudit liquide d'infusion.

De préférence, le dispositif selon la présente invention comprend en outre un réservoir de liquide d'infusion, relié ou comprenant ledit moyen de chauffage dudit liquide d'infusion.

Avantageusement, le dispositif selon la présente invention comprend en outre une pompe reliée d'une part à ladite tubulure d'injection de liquide d'infusion et à une alimentation de liquide d'infusion, éventuellement sous la forme dudit réservoir de liquide d'infusion.

Dans une variante selon l'invention, le dispositif selon l'invention comprend une pompe reliée d'une part à ladite tubulure d'injection de liquide d'infusion et à une alimentation de liquide d'infusion, raccordée audit dispositif de chauffage dudit liquide d'infusion.

De préférence, le dispositif selon l'invention comprend en outre un dispositif régulateur de pression, relié à ladite tubulure d'injection de liquide d'infusion et à une alimentation de liquide d'infusion, éventuellement en amont ou en aval de ladite pompe, lorsqu'elle est présente.

La présente invention se rapporte également à un dispositif dans lequel ladite pompe est également reliée auxdits moyens de translation.

Dans une forme de réalisation préférée, ladite tubulure d'injection de liquide d'infusion présente une zone rectiligne, dont une extrémité est reliée à ladite chambre d'infusion, ladite zone rectiligne étant sensiblement verticale.

Dans une variante avantageuse de l'invention, ladite zone rectiligne de ladite tubulure d'injection de liquide d'infusion est au moins formée partiellement d'une matière à base de polyfluorure, comme par exemple du PTFE, FEP, or PFA.

De préférence, ladite zone rectiligne de ladite tubulure d'injection de liquide d'infusion est solidaire de ladite chambre d'infusion et est par exemple obtenue par moulage simultané de ladite chambre d'infusion et de ladite zone rectiligne.

D'autres formes de réalisation du dispositif suivant l'invention sont indiquées dans les revendications annexées.

L'invention a aussi pour objet un procédé de préparation de boissons infusées, comprenant les étapes de :
- introduction d'une capsule contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser, dans une position dans laquelle ladite face frontale est sensiblement verticale, sur un support de capsule,
- injection d'un liquide d'infusion dans ledit récipient de ladite capsule,
- infusion dudit liquide d'infusion avec ladite matière sèche à infuser de façon à former ladite boisson infusée dans ladite chambre d'infusion en communication fluidique avec le récipient de la capsule, et
- évacuation dudit liquide infusé par une ouverture localisée dans le fond de ladite chambre d'infusion après ladite étape d'infusion.

Ce procédé est caractérisé en ce qu'il comprend en outre, un mouvement de translation relatif entre un cylindre et ladite chambre d'infusion pour maintenir une étanchéité entre ladite capsule et ladite chambre d'infusion de ladite communication fluidique, ledit cylindre comprenant une première extrémité et une deuxième extrémité, ladite première extrémité comprenant au moins une zone de contact agencée pour pousser ladite face dorsale de la capsule , et des moyens de translation agencés pour créer un mouvement horizontal de translation relatif entre ledit cylindre et ladite chambre d'infusion de manière à maintenir l'étanchéité entre la capsule et ladite chambre d'infusion par une force de compression exercée sur lesdits moyens d'étanchéité maintenant la communication fluidique.

Avantageusement, ledit mouvement de translation est un mouvement de translation du cylindre.

Dans une variante, ledit mouvement de translation est un mouvement de translation de ladite chambre d'infusion.

Dans une autre variante, ledit mouvement de translation est un mouvement de translation du cylindre et de la chambre d'infusion.

De préférence, le procédé selon l'invention comprend en outre une détection d'une information logée sur ladite face dorsale de ladite capsule, lesdits moyens de détection étant au moins partiellement confinés dans ledit cylindre

De préférence, ladite détection est une détection de code barre, de couleur, de pictogramme, de tag et analogues.

Avantageusement, la détection de ladite information engendre un signal, ledit signal étant transmis à des moyens de contrôle, ledit moyens de contrôle agissant ensuite sur des moyens de contrôle auxiliaire de température, de durée d'infusion, de pression du liquide d'infusion et de quantité de liquide d'infusion, de manière à agir sur la température et/ou le volume et/ou la pression ainsi que sur la durée de l'infusion dudit liquide d'infusion, en fonction de l'information.

De préférence, ladite injection d'un liquide d'infusion dans ledit récipient de ladite capsule a lieu par injection dudit liquide d'infusion dans la chambre d'infusion en communication fluidique avec ledit récipient de ladite capsule, ledit liquide d'infusion s'écoulant dans la chambre d'infusion percolant au travers de ladite paroi filtrante pour pénétrer dans ledit récipient de la capsule.

De manière préférentielle, une partie de l'étape d'infusion a lieu simultanément à ladite étape d'injection.

De manière particulièrement préférentielle, ladite injection dudit liquide d'infusion est effectuée de haut en bas et provoque des turbulences dans le liquide d'infusion déjà présent dans la chambre d'infusion, de manière à homogénéisé le contenu du liquide d'infusion.

De manière avantageuse, le procédé selon l'invention comprend en outre une étape de nettoyage dans laquelle un fluide de rinçage est introduit et évacué de la chambre d'infusion.

En particulier, le procédé comprend également une étape d'évacuation de la capsule de son support après évacuation dudit liquide infusé de la chambre d'infusion.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure lest une vue schématique d'un dispositif selon la présente invention.

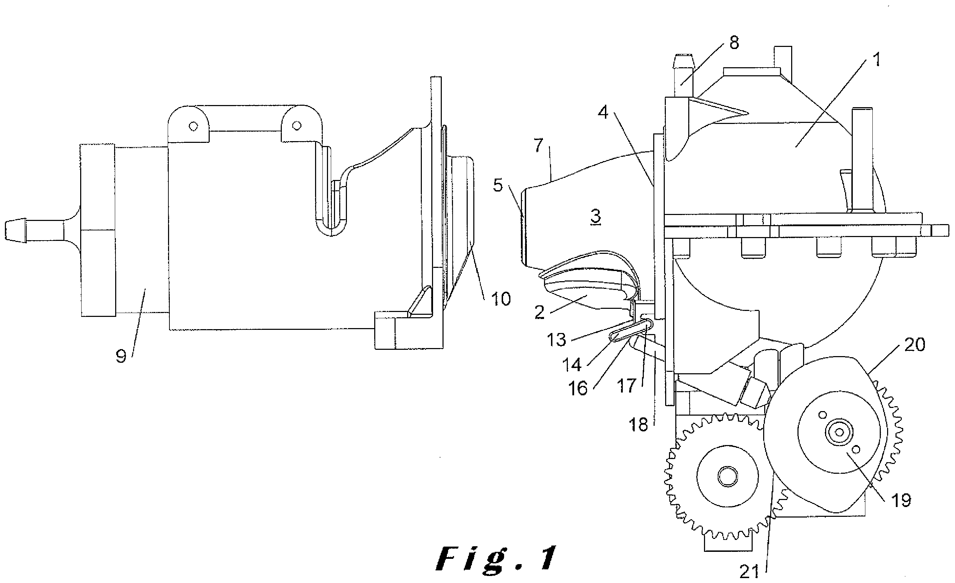

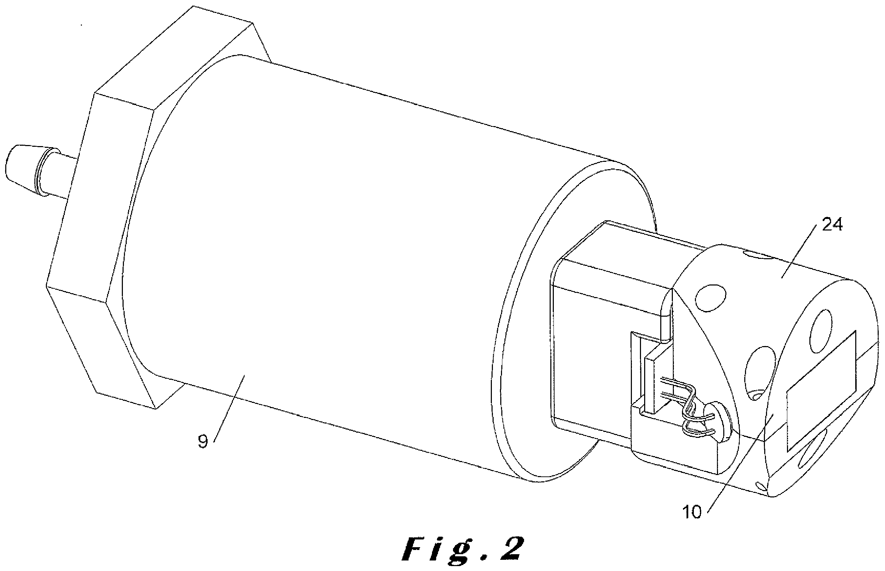

La figure 2 est une vue schématique d'un cylindre muni d'un moyen de détection selon la présente invention.

Sur les figures, les éléments identiques ou analogues portent les mêmes références.

Comme on peut le voir sur la figure, un aspect de la présente invention concerne un dispositif destiné à recevoir une capsule (3) d'ingrédients et d'extraire l'ingrédient en injectant un liquide au sein d'une capsule (3) et dans et via une chambre d'infusion.

La capsule (3) sera positionnée entre deux parties. Les deux parties sont disposés de manière à être mobile par rapport à l'autre d'une position ouverte - pour l'insertion ou le retrait d'une capsule (3) - à une position de fermeture - pour faire passer un liquide chauffé au sein de la capsule (3).

Avantageusement, dans la forme de réalisation illustrée, au moins une des parties mobiles est actionnée hydrauliquement et déplaçable dans la position fermée par le dispositif d'injection de liquide.

En règle générale, ce dispositif est composé d'une machine de préparation de boisson pour recevoir des capsules (3) d'ingrédients. Par exemple, la machine est une machine de préparation du café, du thé, du chocolat ou de la soupe. En particulier, l'appareil est agencé pour la préparation à l'intérieur d'une chambre d'infusion (1) par passage d'eau chaude ou d'un autre liquide au sein d'une capsule (3) contenant un ingrédient de la boisson à préparer, tel que du café moulu ou du thé ou du chocolat ou du cacao ou de la poudre de lait.

Par exemple, la machine de préparation comprend: une unité de préparation de boisson agencé pour recevoir des capsules (3) pour une utilisation et d'évacuer des capsules (3) lors de l'utilisation, par exemple, un dispositif ayant une ouverture débouchant dans une zone à laquelle les capsules (3) sont évacuées de l'unité de préparation, et un réceptacle ayant une cavité formant un espace de stockage pour collecter les capsules (3) évacués vers une région dans le récipient à un niveau de remplissage. Le réceptacle peut être inséré dans la zone de collecte de capsules (3) usagées et peut être retiré de cette région pour vider les capsules (3) collectées.

Plus particulièrement, le dispositif pour préparer des boissons infusées comprends un support (2) agencé pour recevoir une capsule (3) contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser, dans une position dans laquelle ladite face frontale est sensiblement verticale.

De façon avantageuse, la présente invention permet de maintenir l'étanchéité entre la capsule (3) et la chambre d'infusion (1) lorsqu'une perte hydraulique ou une baisse d'étanchéité a lieu. L'augmentation de la pression hydraulique au sein du piston permet de compenser cette diminution d'étanchéité fluidique. Une alternative permettant également de compenser une éventuelle diminution d'étanchéité entre la capsule et la chambre d'infusion peut également peut être l'utilisation d'un piston muni d'un ressort de telle façon que le piston maintient une pression suffisante sur la capsule de façon à conserver l'étanchéité fluidique.

Le dispositif comprend aussi des moyens d'injection agencés pour introduire un liquide d'infusion dans ladite capsule (3), lorsque ledit support (2) reçoit une capsule (3), et une chambre d'infusion (1) présentant une ouverture sensiblement verticale, ladite ouverture sensiblement verticale étant agencée pour être en communication fluidique avec ladite paroi filtrante, ladite bague comportant des moyens d'étanchéité agencées pour maintenir la communication fluidique étanche par rapport à un milieu environnant, extérieur à une zone d'échange fluidique ainsi que une sortie munie de moyens de fermeture/ouverture agencés pour permettre à un liquide infusé de s'écouler de la chambre d'infusion (1).

Comme on peut le voir, les moyens d'injection dudit liquide d'infusion aboutissent dans la chambre d'infusion (1) par une tubulure d'injection de liquide d'infusion.

Le dispositif selon l'invention comprend un cylindre comprenant une première extrémité et une deuxième extrémité, ladite première extrémité comprenant au moins une zone d'accueil creuse agencée pour loger ladite face dorsale de la capsule (3) et ladite enveloppe solide, et des moyens de translation agencés pour créer un mouvement horizontal de translation relatif entre ledit piston et ladite chambre d'infusion (1) de manière à maintenir i'étanchéité entre la capsule (3) et ladite chambre d'infusion (1) par une force de compression exercée sur lesdits moyens d'étanchéité maintenant la communication fluidique.

Conformément à l'invention, le dispositif est configuré de façon à mettre sous pression et faire circuler liquide non chauffé vers au moins un support (2) destiné à actionner et à déplacer au moins un support (2) par la circulation non chauffée liquide sous pression.

Typiquement, les moyens de translation, de préférence hydraulique actionnable et mobile a une configuration de déplacement linéaire.

Dans un mode de réalisation, il comprend un piston hydraulique formé d'un cylindre (9) et d'un deuxième cylindre concentrique, tel qu'un piston, mobile dans une chambre de piston, le dispositif d'injection de liquide étant relié à la chambre de piston pour l'injection de liquide sous pression dans la chambre et la conduite hydraulique de l'appui du piston contre la capsule (3) crée la position fermée.

Par exemple, la chambre de piston a une entrée et une sortie pour faire circuler un liquide sous pression à travers la chambre de piston. Il s'agit d'un dispositif de circulation de liquide unique pour la fermeture hydraulique du siège de capsule (3) et à le maintenir dans un état fermé, et pour en extraire la matière de la capsule (3). Pourtant, la fermeture hydraulique et le maintien du siège dans un état fermé sont réalisés avec un liquide circulant non chauffée tandis que l'extraction est réalisée avec le liquide lors du chauffage.

Dans un autre mode de réalisation le piston hydraulique renferme une seconde chambre disposant d'un ressort. Cette chambre du ressort permet d'exercer une pression sur la chambre du piston.

Typiquement, lorsque la sortie hydraulique de la chambre permettra au liquide de s'écouler à l'extérieur de la chambre du piston, au moins un ressort compris dans la chambre du ressort permettra d'accélérer cette vidange de la chambre piston et créer la position ouverte du siège de la capsule (3).

Avantageusement, cette position ouverte sera maintenue grâce à la force d'au moins un ressort et ce, sans qu'une pression hydraulique soit activée dans le dispositif.

La chambre de piston a typiquement une entrée et une sortie pour faire circuler un liquide sous pression à travers la chambre de piston, tandis que les supports sont des capsules en position de fermeture.

Typiquement, le dispositif est associé à une pompe et fait circuler un liquide dans la capsule (3) par l'intermédiaire du support hydraulique, par exemple, à travers la chambre de piston.

Au moins l'un des supports capsule (3) peut être déplacé vers et à distance du support de la capsule (3) faisant face par un dispositif d'entraînement mécanique. Le dispositif d'entraînement mécanique peut comporter un levier de transmission de force, en particulier un agencement d'articulation, et / ou un agencement d'engrenage de transmission de force, en particulier un agencement de pignon droit. Le dispositif d'entraînement mécanique peut être actionné par une poignée pouvant être entraîné à la main et / ou par un moteur, en particulier un moteur électrique.

Dispositif dans lequel, le piston est associé à un système de lecture du code de reconnaissance (24) de la capsule (3). Typiquement, le dispositif permet de recevoir des capsules (3) possédant des matières à infuser nécessitant des paramètres d'infusions variés. Par paramètres, il faut comprendre par exemple, la température du liquide injecté au sein de la capsule (3), la durée d'infusion de la matière contenue dans la capsule (3), le ou les cycles injection du liquide dans la capsule (3).

Avantageusement, la précision de la course du piston et de la linéarité du mouvement, permettent de faciliter la précision de lecture du système de reconnaissance (24) placé sur la face de la capsule (3) en contact avec le lecteur. Par code de reconnaissance il faut comprendre un code couleur, un code bar une loge, picto, QR code,...etc.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Dispositif pour préparer des boissons infusées comprenant:
- un support (2) agencé pour recevoir une capsule (3) contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser, dans une position dans laquelle ladite face frontale est sensiblement verticale,
- des moyens d'injection agencés pour introduire un liquide d'infusion dans ladite capsule (3), lorsque ledit support (2) reçoit une capsule (3),
- une chambre d'infusion (1) présentant une ouverture sensiblement verticale, ladite ouverture sensiblement verticale étant agencée pour être en communication fluidique avec ladite paroi filtrante, ladite bague comportant des moyens d'étanchéité agencées pour maintenir la communication fluidique étanche par rapport à un milieu environnant, extérieur à une zone d'échange fluidique, et
- une sortie munie de moyens de fermeture/ouverture agencés pour permettre à un liquide infusé de s'écouler de la chambre d'infusion (1), **caractérisé en ce que** lesdits moyens d'injection dudit liquide d'infusion aboutissent dans la chambre d'infusion (1) par une tubulure d'injection (8) de liquide d'infusion et **en ce qu'**il comprend en outre un cylindre (9) comprenant une première extrémité et une deuxième extrémité, ladite première extrémité comprenant au moins une zone d'accueil creuse agencée pour loger ladite face dorsale de la capsule (3) et ladite enveloppe solide, et des moyens de translation agencés pour créer un mouvement horizontal de translation relatif entre ledit piston et ladite chambre d'infusion (1) de manière à maintenir l'étanchéité entre la capsule (3) et ladite chambre d'infusion (1) par une force de compression exercée sur lesdits moyens d'étanchéité maintenant la communication fluidique.

2. Dispositif selon la revendication 1, dans lequel lesdits moyens de translation sont reliés audit cylindre (9), ledit cylindre (9) présentant une première position reculée et une deuxième position de contact, lesdits moyens de translation étant agencés pour déplacer ledit cylindre (9) entre ladite première position et ladite deuxième position, correspondant à une position dans laquelle ladite capsule (3) est en contact étanche avec ladite chambre d'infusion (1) et où ladite force de compression est exercée sur lesdits moyens d'étanchéités.

3. Dispositif selon l'une des revendications 1 et 2, dans lequel il est prévu un deuxième cylindre, disposé concentriquement audit cylindre (9), relié auxdits moyens de translation ou faisant partie intégrante desdits moyens de translation, pour exercer une pression sur ladite face dorsale de ladite capsule (3) permettant d'exercer une compression des moyens d'étanchéité pour maintenir la communication fluidique étanche par rapport audit milieu environnant.

4. Dispositif selon l'une des revendications 1 à 3, dans lequel lesdits moyens de translation sont reliés à ladite chambre d'infusion (1), ladite chambre d'infusion (1) présentant une première position reculée et une deuxième position de contact, lesdits moyens de translation étant agencés pour déplacer ladite chambre d'infusion (1) entre ladite première position et ladite deuxième position, correspondant à une position dans laquelle ladite capsule (3) est en contact étanche avec ladite chambre d'infusion (1) et où ladite force de compression est exercée sur lesdits moyens d'étanchéités.

5. Dispositif selon la revendication 4, dans lequel il est prévu un deuxième cylindre, concentrique audit cylindre (9), agencé pour exercer une pression sur ladite face dorsale de ladite capsule (3) permettant d'exercer une compression des moyens d'étanchéité pour maintenir la communication fluidique étanche par rapport audit milieu environnant.

6. Dispositif selon l'une des revendications 4 et 5, dans lequel lesdits moyens de translation sont reliés audit cylindre (9) et à ladite chambre d'infusion (1), ledit cylindre (9) et ladite chambre d'infusion (1) présentant chacun une première position reculée et une deuxième position de contact, lesdits moyens de translation étant agencés pour déplacer ladite chambre d'infusion (1) et ledit cylindre (9) entre ladite première position et ladite deuxième position, correspondant à une position dans laquelle ladite capsule (3) est en contact étanche avec ladite chambre d'infusion (1) et où ladite force de compression est exercée sur lesdits moyens d'étanchéités.

7. Dispositif selon l'une des revendications 1 à 5, comprenant des moyens de détection agencés pour lire une information logée sur ladite face dorsale de ladite capsule (3), lesdits moyens de détection étant au moins partiellement confinés dans ledit cylindre (9) ou ledit deuxième cylindre (9).

8. Dispositif selon l'une des revendications 1 à 7, dans lequel ladite tubulure d'injection de liquide d'infusion est reliée à une partie supérieure de ladite chambre d'infusion (1) à proximité de ladite ouverture sensiblement verticale.

9. Dispositif selon l'une des revendications 1 à 8, comprenant un moyen de chauffage dudit liquide d'infusion et un réservoir de liquide d'infusion, relié ou comprenant ledit moyen de chauffage dudit liquide d'infusion.

10. Dispositif selon l'une des revendications 1 à 9, comprenant en outre une pompe reliée d'une part à ladite tubulure d'injection de liquide d'infusion et à une alimentation de liquide d'infusion, éventuellement sous la forme dudit réservoir de liquide d'infusion, raccordée audit dispositif de chauffage dudit liquide d'infusion et reliée aux dits moyens de translation.

11. Dispositif selon l'une des revendications 1 à 10, dans lequel ladite tubulure d'injection de liquide d'infusion présente une zone rectiligne, dont une extrémité est reliée à ladite chambre d'infusion (1), ladite zone rectiligne étant sensiblement verticale et solidaire de ladite chambre d'infusion (1) et est obtenue par moulage simultané de ladite chambre d'infusion (1) et de ladite zone rectiligne.

12. Dispositif selon l'une des revendications 1 à 11, dans lequel ladite chambre d'infusion (1) comporte un sommet par lequel passe un premier plan tangent de tête horizontal et un plan médian séparant la chambre d'infusion (1) en deux parties dont une première partie comporte ladite ouverture sensiblement verticale, ladite ouverture sensiblement verticale présentant également un sommet par lequel passe un deuxième plan tangent horizontal, parallèle audit premier plan tangent de tête horizontal, ladite tubulure d'injection dudit liquide d'infusion étant reliée à ladite chambre d'infusion (1) au travers d'un orifice de passage de liquide d'infusion traversant une paroi extérieure de ladite chambre d'infusion (1), ledit orifice de passage de liquide d'infusion étant situé entre le premier et le deuxième plans tangents et dans ladite première partie.

13. Procédé de préparation de boissons infusées, comprenant les étapes de :
- introduction d'une capsule (3) contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser, dans une position dans laquelle ladite face frontale est sensiblement verticale, sur un support (2) de capsule (3),
- injection d'un liquide d'infusion dans ledit récipient de ladite capsule (3),
- infusion dudit liquide d'infusion avec ladite matière sèche à infuser de façon à former ladite boisson infusée dans ladite chambre d'infusion (1) en communication fluidique avec le récipient de la capsule (3), et
- évacuation dudit liquide infusé par une ouverture localisée dans le fond de ladite chambre d'infusion (1) après ladite étape d'infusion,
**caractérisé en ce que** ladite injection du liquide d'infusion dans ledit récipient de ladite capsule (3) se fait par l'intermédiaire de la chambre d'infusion (1), ladite injection étant effectuée dans ladite chambre d'infusion (1), et **en ce qu'**il comprend en outre, un mouvement de translation relatif entre un cylindre (9) et ladite chambre d'infusion (1) pour maintenir une étanchéité entre ladite capsule (3) et ladite chambre d'infusion (1) de ladite communication fluidique, ledit cylindre (9) comprenant une première extrémité et une deuxième extrémité, ladite première extrémité comprenant au moins une zone d'accueil creuse agencée pour loger ladite face dorsale de la capsule (3) et ladite enveloppe solide, et des moyens de translation agencés pour créer un mouvement horizontal de translation relatif entre ledit piston et ladite chambre d'infusion (1) de manière à maintenir l'étanchéité entre la capsule (3) et ladite chambre d'infusion (1) par une force de compression exercée sur lesdits moyens d'étanchéité maintenant la communication fluidique.

14. Procédé selon la revendication 13, dans lequel ledit mouvement de translation est un mouvement de translation d'au moins l'un du cylindre (9) et de la chambre d'infusion (1).

15. Procédé selon la revendication 14, dans lequel une partie de l'étape d'infusion a lieu simultanément à ladite étape d'injection et ladite injection dudit liquide d'infusion est effectuée de haut en bas et provoque des turbulences dans le liquide d'infusion déjà présent dans la chambre d'infusion (1), de manière à homogénéiser le contenu du liquide d'infusion.

## Patentansprüche

1. Vorrichtung zum Zubereiten von Aufgussgetränken, umfassend:
- einen Halter (2), der eingerichtet ist, um eine Kapsel (3) aufzunehmen, die eine aufzugießende Substanz im trockenen Zustand enthält und mit einer Vorderseite, die eine Filterwand umfasst, mit einem Ring, der die Vorderseite umgibt, mit einer Rückseite, die der Vorderseite gegenüberliegt, und mit einer festen Hülle, die sich zwischen dem Ring und der Rückseite erstreckt und einen Behälter definiert, der eingerichtet ist, um die aufzugießende Substanz in einer Position, in der die Vorderseite im Wesentlichen senkrecht ist, zu enthalten, versehen ist,
- Injektionsmittel, die eingerichtet sind, um eine Aufgussflüssigkeit in die Kapsel (3) einzubringen, wenn der Halter (2) eine Kapsel (3) aufnimmt,
- eine Aufgusskammer (1), die eine im Wesentlichen senkrechte Öffnung aufweist, wobei die im Wesentlichen senkrechte Öffnung eingerichtet ist, um mit der Filterwand in Fluidkommunikation zu stehen, wobei der Ring Dichtmittel umfasst, die eingerichtet sind, um die Fluidkommunikation im Verhältnis zum umgebenden Umfeld, das außerhalb einer Fluidaustauschzone liegt, dicht zu halten, und
- einen Auslass, der mit Schließ-/Öffnungsmitteln versehen ist, die eingerichtet sind, damit eine aufgegossene Flüssigkeit aus der Aufgusskammer (1) ablaufen kann,
**dadurch gekennzeichnet, dass** die Injektionsmittel der Aufgussflüssigkeit über einen Injektionsschlauch (8) für Aufgussflüssigkeit in die Aufgusskammer (1) münden, und dass sie ferner einen Zylinder (9), der ein erstes Ende und ein zweites Ende umfasst, wobei das erste Ende mindestens eine hohle Aufnahmezone umfasst, die eingerichtet ist, um die Rückseite der Kapsel (3) und die feste Hülle zu lagern, und Translationsmittel, die eingerichtet sind, um eine relative waagerechte Translationsbewegung zwischen dem Kolben und der Aufgusskammer (1) zu erstellen, um die Dichtigkeit zwischen der Kapsel (3) und der Aufgusskammer (1) durch eine Kompressionskraft zu bewahren, die auf die Dichtmittel ausgeübt wird und die Fluidkommunikation bewahrt, umfasst.

2. Vorrichtung nach Anspruch 1, wobei die Translationsmittel mit dem Zylinder (9) verbunden sind, wobei der Zylinder (9) eine erste vertiefte Position und eine zweite Kontaktposition aufweist, wobei die Translationsmittel eingerichtet sind, um den Zylinder (9) zwischen der ersten Position und der zweiten Position zu verschieben, die einer Position entspricht, in der die Kapsel (3) in dichtem Kontakt mit der Aufgusskammer (1) steht, und in der die Kompressionskraft auf die Dichtmittel ausgeübt wird.

3. Vorrichtung nach einem der Ansprüche 1 und 2, wobei ein zweiter Zylinder vorgesehen ist, der konzentrisch zu dem Zylinder (9) angeordnet ist, der mit den Translationsmitteln verbunden ist oder fester Bestandteil der Translationsmittel ist, um einen Druck auf die Rückseite der Kapsel (3) auszuüben, so dass eine Kompression der Dichtmittel ausgeübt werden kann, um die dichte Fluidkommunikation im Verhältnis zum umgebenden Umfeld zu bewahren.

4. Vorrichtung nach einem der Ansprüche 1 bis 3, wobei die Translationsmittel mit der Aufgusskammer (1) verbunden sind, wobei die Aufgusskammer (1) eine erste vertiefte Position und eine zweite Kontaktposition aufweist, wobei die Translationsmittel eingerichtet sind, um die Aufgusskammer (1) zwischen der ersten Position und der zweiten Position, die einer Position entspricht, in der die Kapsel (3) in dichtem Kontakt mit der Aufgusskammer (1) steht und in der die Kompressionskraft auf die Dichtmittel ausgeübt wird, zu verschieben.

5. Vorrichtung nach Anspruch 4, wobei ein zweiter Zylinder vorgesehen ist, der zu dem Zylinder (9) konzentrisch ist, der eingerichtet ist, um einen Druck auf die Rückseite der Kapsel (3) auszuüben, so dass eine Kompression der Dichtmittel, um die Fluidkommunikation im Verhältnis zu dem umgebenden Umfeld dicht zu halten, ausgeübt werden kann.

6. Vorrichtung nach einem der Ansprüche 4 und 5, wobei die Translationsmittel mit dem Zylinder (9) und der Aufgusskammer (1) verbunden sind, wobei der Zylinder (9) und die Aufgusskammer (1) jeweils eine erste vertiefte und eine zweite Kontaktposition aufweisen, wobei die Translationsmittel eingerichtet sind, um die Aufgusskammer (1) und den Zylinder (9) zwischen der ersten Position und der zweiten Position, die einer Position entspricht, in der die Kapsel (3) in dichtem Kontakt mit der Aufgusskammer (1) steht, und in der die Kompressionskraft auf die Dichtmittel ausgeübt wird, zu verschieben.

7. Vorrichtung nach einem der Ansprüche 1 bis 5, umfassend Detektionsmittel, die eingerichtet sind, um eine Information zu lesen, die sich auf der Rückseite der Kapsel (3) befindet, wobei die Detektionsmittel mindestens teilweise in dem Zylinder (9) oder dem zweiten Zylinder (9) eingeschlossen sind.

8. Vorrichtung nach einem der Ansprüche 1 bis 7, wobei der Injektionsschlauch für Aufgussflüssigkeit mit einem oberen Teil der Aufgusskammer (1) in der Nähe der im Wesentlichen senkrechten Öffnung verbunden ist.

9. Vorrichtung nach einem der Ansprüche 1 bis 8, umfassend ein Mittel zum Erhitzen der Aufgussflüssigkeit und ein Aufgussflüssigkeitsreservoir, das mit dem Mittel zum Erhitzen der Aufgussflüssigkeit verbunden ist oder dieses umfasst.

10. Vorrichtung nach einem der Ansprüche 1 bis 9, ferner umfassend eine Pumpe, die einerseits mit dem Injektionsschlauch für Aufgussflüssigkeit und mit einer Aufgussflüssigkeitszuführung verbunden ist, gegebenenfalls in der Form eines Aufgussflüssigkeitsreservoirs, die an die Vorrichtung zum Erhitzen der Aufgussflüssigkeit angeschlossen ist und mit den Translationsmitteln verbunden ist.

11. Vorrichtung nach einem der Ansprüche 1 bis 10, wobei der Injektionsschlauch für Aufgussflüssigkeit eine geradlinige Zone aufweist, deren eines Ende mit der Aufgusskammer (1) verbunden ist, wobei die geradlinige Zone im Wesentlichen senkrecht ist und mit der Aufgusskammer (1) fest verbunden ist und durch gleichzeitiges Formen der Aufgusskammer (1) und der geradlinigen Zone erzielt wird.

12. Vorrichtung nach einem der Ansprüche 1 bis 11, wobei die Aufgusskammer (1) eine Spitze umfasst, durch die eine erste waagerechte Kopftangentialebene und eine Mittelebene, welche die Aufgusskammer (1) in zwei Teile trennt, von denen ein erster Teil die im Wesentlichen senkrechte Öffnung umfasst, gehen, wobei die im Wesentlichen senkrechte Öffnung ebenfalls eine Spitze aufweist, durch die eine zweite waagerechte Tangentialebene geht, die zu der ersten waagerechten Kopftangentialebene parallel ist, wobei der Injektionsschlauch für Aufgussflüssigkeit über ein Durchgangsloch für Aufgussflüssigkeit mit der Aufgusskammer (1) verbunden ist, das durch eine Außenwand der Aufgusskammer (1) geht, wobei sich die Durchgangsöffnung für Aufgussflüssigkeit zwischen der ersten und der zweiten Tangentialebene und in dem ersten Teil befindet.

13. Verfahren zum Zubereiten von Aufgussgetränken, umfassend folgende Schritte:
- Einbringen einer Kapsel (3), die eine aufzugießende Substanz im trockenen Zustand enthält und mit einer Vorderseite, die eine Filterwand umfasst, mit einem Ring, der die Vorderseite umgibt, mit einer Rückseite, die der Vorderseite gegenüberliegt, und mit einer festen Hülle, die sich zwischen dem Ring und der Rückseite erstreckt und einen Behälter definiert, der eingerichtet ist, um die aufzugießende Substanz in einer Position, in der die Vorderseite im Wesentlichen senkrecht ist, zu enthalten, versehen ist,
- Injizieren einer Aufgussflüssigkeit in den Behälter der Kapsel (3),
- Aufgießen der Aufgussflüssigkeit mit der aufzugießenden trockenen Substanz, um das Aufgussgetränk in der Aufgusskammer (1) zu bilden, die in Fluidkommunikation mit dem Behälter der Kapsel (3) steht, und
- Ablassen der Aufgussflüssigkeit durch eine Öffnung, die sich im Boden der Aufgusskammer (1) befindet, nach dem Schritt des Aufgießens,
**dadurch gekennzeichnet, dass** die Injektion der Aufgussflüssigkeit in den Behälter der Kapsel (3) über die Aufgusskammer (1) stattfindet, wobei die Injektion in der Aufgusskammer (1) erfolgt, und dass es ferner eine relative Translationsbewegung zwischen einem Zylinder (9) und der Aufgusskammer (1) umfasst, um eine Dichtigkeit der Fluidkommunikation zwischen der Kapsel (3) und der Aufgusskammer (1) zu bewahren, wobei der Zylinder (9) ein erstes Ende und ein zweites Ende, wobei das erste Ende mindestens eine hohle Aufnahmezone umfasst, um die Rückseite der Kapsel (3) und die feste Hülle zu lagern, und Translationsmittel, die eingerichtet sind, um eine relative waagerechte Translationsbewegung zwischen dem Kolben und der Aufgusskammer (1) zu erstellen, um die Dichtigkeit zwischen der Kapsel (3) und der Aufgusskammer (1) durch eine Kompressionskraft zu bewahren, die auf die Dichtmittel ausgeübt wird und die Fluidkommunikation bewahrt, umfasst.

14. Verfahren nach Anspruch 13, wobei die Translationsbewegung eine Translationsbewegung mindestens eines von dem Zylinder (9) und der Aufgusskammer (1) ist.

15. Verfahren nach Anspruch 14, wobei ein Teil des Schritts des Aufgießens gleichzeitig mit dem Schritt des Injizierens stattfindet und die Injektion der Aufgussflüssigkeit von oben nach unten erfolgt und in der Aufgussflüssigkeit, die sich bereits in der Aufgusskammer (1) befindet, Turbulenzen verursacht, um den Inhalt der Aufgussflüssigkeit zu vermischen.

## Claims

1. Device for preparing infused drinks comprising:
- a support (2) arranged to receive a capsule (3) containing a substance to be infused in the dry state provided with a front face comprising a filter wall, a ring surrounding said front face, a rear face, opposite said front face and a solid casing extending between said ring and said rear face and defining a container arranged to contain said substance to be infused, in a position wherein said front face is substantially vertical,
- injection means arranged to introduce an infusion liquid into said capsule (3), when said support (2) receives a capsule (3),
- an infusion chamber (1) having a substantially vertical opening, said substantially vertical opening being arranged to be in fluid communication with said filter wall, said ring comprising sealing means arranged to keep the fluid communication tight in relation to an ambient environment, outside a fluid exchange zone, and
- an outlet provided with closing/opening means arranged to enable an infused liquid to flow from the infusion chamber (1),
**characterized in that** said means for injecting said infusion liquid reach the infusion chamber (1) via an infusion liquid injection tube (8) and **in that** it further comprises a cylinder (9) comprising a first end and a second end, said first end comprising at least one hollow receiving zone arranged to house said rear face of the capsule (3) and said solid casing, and translation means arranged to create a horizontal relative translational movement between said plunger and said infusion chamber (1) so as to maintain the tightness between the capsule (3) and said infusion chamber (1) by a compression force applied onto said sealing means maintaining the fluid communication.

2. Device according to claim 1, wherein said translation means are connected to said cylinder (9), said cylinder (9) having a first retracted position and a second contact position, said translation means being arranged to move said cylinder (9) between said first position and said second position, corresponding to a position wherein said capsule (3) is in tight contact with said infusion chamber (1) and where said compression force is applied onto said sealing means.

3. Device according to one of claims 1 and 2, wherein a second cylinder is provided, arranged concentrically with said cylinder (9), connected to said translation means or integral with said translation means, in order to apply a pressure onto said rear face of said capsule (3) making it possible to apply a compression of the sealing means to keep the fluid communication tight in relation to said ambient environment.

4. Device according to one of claims 1 to 3, wherein said translation means are connected to said infusion chamber (1), said infusion chamber (1) having a first retracted position and a second contact position, said translation means being arranged to move said infusion chamber (1) between said first position and said second position, corresponding to a position wherein said capsule (3) is in tight contact with said infusion chamber (1) and where said compression force is applied onto said sealing means.

5. Device according to claim 4, wherein a second cylinder is provided, concentric with said cylinder (9), arranged for applying a pressure on said rear face of said capsule (3) making it possible to apply a compression of the sealing means to keep the fluid communication tight in relation to said ambient environment.

6. Device according to one of claims 4 and 5, wherein said translation means are connected to said cylinder (9) and said infusion chamber (1), said cylinder (9) and said infusion chamber (1) having each a first retracted position and a second contact position, said translation means being arranged to move said infusion chamber (1) and said cylinder (9) between said first position and said second position, corresponding to a position wherein said capsule (3) is in tight contact with said infusion chamber (1) and where said compression force is applied onto said sealing means.

7. Device according to any of claims 1 to 5, comprising detection means arranged to read information lodged on said rear face of said capsule (3), said detection means being at least partially confined in said cylinder (9) or said second cylinder (9).

8. Device according to one of claims 1 to 7, wherein said infusion liquid injection tube is connected to an upper part of said infusion chamber (1) in the vicinity of said substantially vertical opening.

9. Device according to one of claims 1 to 8, comprising means for heating said infusion liquid and a container of infusion liquid, connected to or comprising said means for heating said infusion liquid.

10. Device according to one of claims 1 to 9, further comprising a pump connected on one hand to said infusion liquid injection tube and to a supply of infusion liquid, optionally in the form of said container of infusion liquid, connected to said device for heating said infusion liquid and connected to said translation means.

11. Device according to one of claims 1 to 10, wherein said infusion liquid injection tube has a rectilinear zone, one end of which being connected to said infusion chamber (1), said rectilinear zone being substantially vertical and part with said infusion chamber (1) and being obtained by simultaneous molding of said infusion chamber (1) and said rectilinear zone.

12. Device according to one of claims 1 to 11, wherein said infusion chamber (1) comprises an apex through which pass a first horizontal top tangent plane and a median plane separating the infusion chamber (1) into two parts wherein a first part comprises said substantially vertical opening, said substantially vertical opening also having an apex through which a second horizontal tangent plane passes, parallel with said first horizontal top tangent plane, said injection tube of said infusion liquid being connected to said infusion chamber (1) via an infusion liquid passage opening through an external wall of said infusion chamber (1), said infusion liquid passage opening being situated between the first and the second tangent planes and in said first part.

13. Method for preparing infused drinks, comprising the following steps:
- introducing a capsule (3) containing a substance to be infused in the dry state provided with a front face comprising a filter wall, a ring surrounding said front face, a rear face, opposite said front face and a solid casing extending between said ring and said rear face and defining a container arranged to contain said substance to be infused, in a position wherein said front face is substantially vertical, onto a capsule (3) support (2),
- injecting an infusion liquid into said container of said capsule (3),
- infusion of said infusion liquid with said dry substance to be infused so as to form said infused drink in said infusion chamber (1) in fluid communication with the capsule (3) container, and
- draining said infused liquid via an opening located in the bottom of said infusion chamber (1) after said infusion step,
**characterized in that** said injection of the infusion liquid into said container of said capsule (3) is performed via the infusion chamber (1), said injection being performed in said infusion chamber (1), and **in that** it further comprises a relative translational movement between a cylinder (9) and said infusion chamber (1) to maintain tightness between said capsule (3) and said infusion chamber (1) of said fluid communication, said cylinder (9) comprising a first end and a second end, said first end comprising at least one hollow receiving zone arranged to house said rear face of the capsule (3) and said solid casing, and translation means arranged to create a horizontal relative translational movement between said plunger and said infusion chamber (1) so as to maintain the tightness between the capsule (3) and said infusion chamber (1) by a compression force applied onto said sealing means maintaining the fluid communication.

14. Method according to claim 13, wherein said translational movement is a translational movement of at least one of the cylinder (9) and the infusion chamber (1).

15. Method according to claim 14, wherein a part of the infusion step takes place simultaneously with said injection step and said injection of said infusion liquid is carried out from top to bottom and causes turbulence in the infusion liquid already present in the infusion chamber (1), so as to homogenize the content of the infusion liquid.
